# EUROPÄISCHE PATENTANMELDUNG

(11) **EP 2 479 858 A2**
(43) Veröffentlichungstag der Anmeldung: **25.07.2012**
(21) Anmeldenummer: 11009499.2
(22) Anmeldetag: 01.12.2011
(51) Int. Cl.: H02G 3/14, H02B 1/44

(54) **Einsatz-Abdeckung eines Funktionselements einer Flügelanlage**

(30) Priorität: 21.01.2011 DE 102011000251
(71) Anmelder: Dorma GmbH + Co. KG, 58256 Ennepetal (DE)
(72) Erfinder: Glebe, Volker, 36166 Haunetal (DE)

(57) **Zusammenfassung**

Eine Abdeckung (10, 20) eines Einsatzes ist offenbart. Der Einsatz (1) ist gestaltet, in einen Aufnahmeabschnitt (6) einer Flügelanlage (3) ortsfest eingesetzt zu werden. Er ist eingerichtet, ein Funktionselement der Flügelanlage (3) haltend aufzunehmen. Die Anlage (3) umfasst einen Flügel (4). Die Abdeckung (10, 20) umfasst ein Abdeckteil (20), gestaltet, auf dem sonstigen Einsatz (1) diesen und das vom Einsatz (1) gehaltene Funktionselement entgegengesetzt zur Einsetzrichtung des Einsatzes (1) zumindest teilweise abdeckend befestigt zu werden. Es ist zu zwei Seiten (28) hin geschlossen, die im Wesentlichen parallel zueinander verlaufen und voneinander weg und jeweils in eine Richtung im Wesentlichen senkrecht zur Einsetzrichtung des Einsatzes (1) weisen. Es ist zudem zumindest zu einer Seite (29) hin offen, die die geschlossenen Seiten (28) miteinander verbindet und von diesen weg ebenfalls im Wesentlichen senkrecht zur Einsetzrichtung des Einsatzes (1) weist. Das Abschlussteil (10) ist gestaltet, so am Abdeckteil (20) eine jeweilige der offenen Seite/n (29) zumindest teilweise verschließend befestigt zu werden, dass eine haubenartige Abdeckung (10, 20) entsteht, oder einstückig damit ausgebildet. Alternativ oder zusätzlich umfasst die Abdeckung (10, 20) zumindest ein zweites Abdeckteil (20), das wie das zumindest eine Abdeckteil (20) gebildet ist. Beide Abdeckteile (20) liegen mit ihrer jeweiligen, zumindest einen offenen Seite (29) aufeinander zu aneinander an.

Eine Flügelanlage (3) umfasst diesen Einsatz (1) mit Abdeckung (10, 20), der zumindest ein Funktionselement der Flügelanlage (3) hält. Die Abdeckung (10, 20) umfasst zumindest ein Abdeckteil (20). Der Einsatz (1) ist in einen Aufnahmeabschnitt (6) der Flügelanlage (3) ortsfest eingesetzt. Die Abdeckung (10, 20) ist am Einsatz (1) befestigt.

## Beschreibung

Die Erfindung betrifft eine Abdeckung für zumindest ein Funktionselements, insbesondere Bedien- und/oder Anzeigeelement, einer Flügelanlage.

Derartige Funktionselemente an sich sind bekannt. Sie können mithilfe eines jeweiligen Einsatzes eingerichtet sein, Aufputz und/oder Unterputz montiert zu werden. Beispielsweise zeigt die DE 20 2008 014 279 U1 eine Steckdose als Funktionselement, nämlich als ein Element zur Energieversorgung, mit einer Abdeckvorrichtung. Das Gehäuse der Abdeckvorrichtung ist in Richtung Steckdosen-Tragring als Einsatz offen. D. h. das Gehäuse umgibt die Steckdose, in Einsteckrichtung in eine Wand gesehen, in der sie Unterputz montiert ist, vollständig. Daher sind derartige Elemente auch nur einzeln montierbar. Optisch ist keine Einheit herstellbar, die Elemente treten optisch einzeln hervor. Einerseits erschwert dies die Montage insbesondere durch die für jedes Element gesondert auszuführende Ausrichtung der Elemente zueinander. Andererseits müssen die Elemente, wenn erforderlich, untereinander ebenfalls Unterputz verkabelt werden; es müssen entsprechende Kabelaufnahmeräume existieren oder aufwändig geschaffen werden.

Aufgabe der Erfindung ist es, die Nachteile des Standes der Technik zumindest zu verringern.

Diese Aufgabe wird durch den Gegenstand der Ansprüche 1 und 7 gelöst. Vorteilhafte Weiterbildungen der Erfindung sind in den Unteransprüchen angegeben.

Erfindungsgemäß ist eine Einsatz-Abdeckung vorgesehen. Der zugehörige, gesamte Einsatz ist in bekannter Weise gestaltet, in einen korrespondierenden Aufnahmeabschnitt einer Flügelanlage ortsfest eingesetzt bzw. an diesem befestigt zu werden. Die Flügelanlage weist dabei zumindest einen ortsfesten, schwenkbaren und/oder entlang eines Verfahrwegs bewegbaren Flügel auf. D. h. die Flügelanlage stellt im Rahmen der Erfindung eine Tür-, Fenster- oder Trennwandanlage oder gar eine Fassade mit Flügelelementen dar. Der Einsatz ist in bekannter Weise eingerichtet, zumindest ein Funktionselement beispielsweise in Form eines Anzeige-oder Betätigungselements der Flügelanlage haltend aufzunehmen, und umfasst zumindest ein Abdeckteil. Das zumindest eine Abdeckteil ist erfindungsgemäß gestaltet, auf dem sonstigen Einsatz diesen und zumindest eines des zumindest einen vom Einsatz gehaltenen Funktionselements in eine Richtung entgegengesetzt zu einer Einsetzrichtung des Einsatzes in den Aufnahmeabschnitt diesen zumindest teilweise abdeckend befestigt zu werden. Der Aufnahmeabschnitt kann also beispielsweise eine Wand, ein Rahmenprofil oder ein sonstiges Teil der Flügelanlage sein, das geeignet ist, mit einem Aufnahmeabschnitt bzw. einer Aufnahme für den Einsatz ausgebildet zu werden. Besonders geeignet sind beispielsweise Hohlprofile. Dies bedeutet ferner, dass der Einsatz Aufputz oder auch Unterputz montiert werden kann. Das Abdeckteil bildet somit den optischen Abschluss des Einsatzes nach außen, also in Richtung vom Aufnahmeabschnitt weg. Das Abdeckteil ist zumindest zu zwei Seiten hin geschlossen, die im Wesentlichen parallel zueinander verlaufen und voneinander weg sowie jeweils in eine Richtung im Wesentlichen senkrecht zur Einsetzrichtung des Einsatzes in den Aufnahmeabschnitt weisen. D. h. im einfachsten Fall ist das Abdeckteil im Querschnitt im Wesentlichen U-förmig ausgebildet. Dies ermöglicht die kostengünstige Herstellung des Abdeckteils aus einem Strangprofil, das je nach Material beispielsweise mittels Strangpressens, -gießens bzw. (Ko-)Extrusion und nachherigem Ablängen hergestellt werden kann. Dieses Abdeckteil ist demgemäß zumindest zu einer Seite hin offen, die die zwei einander abgewandten, geschlossenen Seiten miteinander verbindet und von den zwei einander abgewandten Seiten weg ebenfalls in eine Richtung im Wesentlichen senkrecht zur Einsetzrichtung des Einsatzes in den Aufnahmeabschnitt weist. D. h. die offene Seite separiert die anderen, zumindest zwei geschlossenen Seiten voneinander. Diese zumindest eine offene Seite des beispielsweise auf dem jeweiligen Einsatz befestigten Abdeckteils hat den zusätzlichen Vorteil, dass im Nachhinein beispielsweise Leitungen durch die jeweilige offene Seite hindurch geführt werden können. Dies ist insbesondere günstig, wenn mehrere Abdeckteile aneinandergereiht werden sollen, deren abzudeckenden Einsätze miteinander verkabelt werden müssen. Die Verkabelung kann Aufputz erfolgen; die Einsätze können also vorab in die zugehörigen Aufnahmeabschnitte eingesetzt und befestigt werden. Das vorgenannte, zumindest eine Abschlussteil ist derart gestaltbar, an dem Abdeckteil eine jeweilige der zumindest einen offenen Seite zumindest teilweise verschließend befestigt zu werden, dass eine haubenartige Abdeckung entsteht.

Zusätzlich oder alternativ weist die erfindungsgemäße Abdeckung zumindest ein zweites Abdeckteil auf, das wie das bereits angegebene, zumindest eine Abdeckteil gebildet ist. Beide Abdeckteile liegen mit ihrer jeweiligen, zumindest einen offenen Seite aufeinander zu aneinander an. In dem Fall kann ein Abdeckteil auch einstückig mit einem Abdeckteil ausgebildet sein. Das Abschlussteil ist erfindungsgemäß also vorgesehen, im erstgenannten Fall eine jeweilige der offenen Seite(n) des erstgenannten Abdeckteils zu schließen. Im zweiten Fall, also beim einstückigen Ausbilden mit dem zumindest einen Abdeckteil, verbleibt erfindungsgemäß weiterhin pro Abdeckteil eine offene Seite. Diese kann durch ein anderes Abschlussteil geschlossen sein. Es ist aber auch möglich, zwei derartige Abdeckteile vorzusehen, die mit einer jeweiligen ihrer offenen Seite(n) einander zugewandt aneinander anliegen. Diese Seiten bleiben also offen und können beispielsweise dem Durchführen von Leitungen dienen. In diesem Zustand entsteht eine Art U-förmiger Verbindungskanal zwischen den beiden Abdeckteilen, was die Möglichkeit der vorgenannten Verkabelung vorzugsweise zwischen mehreren Einsätzen ermöglicht. Sind die Abdeckteile an der jeweils anderen, gegenüberliegenden Seite geschlossen, entsteht also wieder ein in sich geschlossenes, haubenartiges Abdeckmodul. Der Aufnahmeabschnitt der Flügelanlage, an dem der zumindest eine Einsatz befestigt ist, kann bewegbar oder ortsfest ausgebildet bzw. angeordnet sein. D. h. die Erfindung ist universell einsetzbar.

Alternativ oder zusätzlich ist das erfindungsgemäße Abdeckteil vorzugsweise ferner an der zumindest einen offenen oder aber einer dieser offenen Seite gegenüberliegenden Seite gestaltet, an einer zugewandten der zumindest einen offenen bzw. nunmehr dieser offenen Seite gegenüberliegenden Seite eines zweiten Abdeckteils mit der gleichen Gestaltung ortsfest angebracht zu werden. D. h. zwei Abdeckteile können aneinander befestigt werden, wodurch eine Art Abdeckmodul entsteht.

Im zweiten Fall, wenn also die offenen Seiten der beiden Abdeckteile voneinander weg weisen, entsteht ein zu zwei Seiten hin offenes Abdeckmodul. Dadurch können die offenen Seiten der so entstehenden Abdeckung mit Abschlüssen versehen werden, die optisch und/oder funktionell anders ausgebildet sein können als die Abdeckteile. Beispielsweise kann ein Abschluss mit Lüftungsöffnungen zum Kühlen elektronischer Elemente des jeweiligen Einsatzes versehen sein. Abgesehen davon können beispielsweise Sensoren oder Anzeigeelemente angeordnet sein. Es bieten sich mithin vielerlei Abwandlungen und Möglichkeiten.

Die Befestigung der zumindest zwei Abschlussteile erfolgt vorzugsweise mittels Verrastens. Dies stellt eine sehr einfache und wenig fehleranfällig Montagemöglichkeit dar.

Vorzugsweise ist das Abdeckteil sowohl an der zumindest einen offenen Seite als auch an der dieser gegenüberliegenden Seite gestaltet, an einer zugewandten der zumindest einen offenen bzw. dieser gegenüberliegenden Seite des zweiten Abdeckteils mit der gleichen Gestaltung ortsfest angebracht zu werden. Dies ermöglicht, das eine Abdeckteil beidseitig an einem anderen Abdeckteil befestigen bzw. angrenzend anordnen zu können. Dadurch kann eine Abdeckung geschaffen werden, die mehr als zwei Abdeckteile umfasst. Es verbessert sich mithin die universelle Anwendbarkeit des erfindungsgemäßen Abdeckteils.

Vorzugsweise kann jedes der vorbeschriebenen Abdeckteile zu zwei einander abgewandten Seiten jeweils offen ausgebildet sein, womit das vorgenannte im Querschnitt im Wesentlichen U-förmige Profil für jedes Abdeckteil entsteht. Dadurch sind beide der vorgenannten Fälle in einer Abdeckung realisierbar, nämlich der Verbindungskanal und die Möglichkeit der unterschiedlichen Ausbildung der Abschlussteile bzw. stirnseitigen Abschlüsse der so bildbaren Einsatz-Abdeckung je nach Erfordernis vor Ort.

Das zumindest eine Abdeckteil der erfindungsgemäßen Abdeckung kann alternativ oder zusätzlich hinsichtlich der Befestigung eines Abschlussteils oder eines zusätzlichen Abdeckteils um eine Achse parallel zur Einsetzrichtung des zugehörigen Einsatzes um 180° rotationssymmetrisch ausgebildet sein. D. h. das Abdeckteil kann in der gewünschten Montageposition oder um 180°um vorgenannte Achse gedreht eingesetzt werden, ohne die Montage zu verändern und damit negativ zu beeinflussen. Dies ist insbesondere bei auch sonst derart rotationssymmetrisch ausgebildeten Abdeckteilen günstig, die Montage ist vereinfacht. Dadurch erhöht sich die Einsatzflexibilität, und die Gefahr von Montagefehlern ist geringer.

Eine erfindungsgemäße Flügelanlage ist ausgebildet, wie vorstehend angegeben. Sie weist zumindest einen der vorgenannten Einsätze auf. Der Einsatz hält zumindest ein Funktionselement der Flügelanlage und umfasst eine der vorbeschriebenen Abdeckungen. Die Abdeckung umfasst zumindest eines der vorbeschriebenen Abdeckteile. Der zumindest eine Einsatz ist also in einen korrespondierenden Aufnahmeabschnitt der Flügelanlage ortsfest eingesetzt, und die Abdeckung ist auf diesem zumindest einen Einsatz befestigt. D. h. der Einsatz inklusive Abdeckung ist in jedes Teil der Flügelanlage, sei es in einen jeweiligen Flügel bzw. dessen Rahmen selbst oder in ein anderes, feststehendes Teil der Flügelanlage wie einer Wand, Zarge, den Flügel umgebenden Rahmen oder dergleichen, einsetzbar bzw. an diesem befestigbar. Die Abdeckung erlaubt einen universellen Einsatzort, lediglich der Aufnahmeabschnitt ist erforderlich.

Vorzugsweise ist das zumindest eine Abdeckteil, wie vorstehend angegeben, zum Befestigen eines jeweiligen Abschlussteils ausgebildet, und zwar so, dass die Abdeckung an jeder, aufgrund des zumindest einen Abdeckteils vorhandenen offenen Seite mittels eines jeweiliges Abschlussteils zumindest teilweise abgedeckt ist. Daraus ergibt sich die Möglichkeit eines Aneinanderreihens mehrerer Abdeckteile zu einer größeren Abdeckung, die nur noch an höchstens zwei Seiten mithilfe von Abschlussteilen verschlossen bzw. abgedeckt werden muss.

Weitere Merkmale und Vorteile der Erfindung ergeben sich aus der nachfolgenden Beschreibung bevorzugter Ausführungsformen. Es zeigen:
- Figur 1: einen Einsatz gemäß einer ersten Ausführungsform der Erfindung,
- Figur 2: einen Einsatz gemäß einer zweiten Ausführungsform der Erfindung in zwei Ansichten,
- Figur 3: eine Einsatz-Abdeckung gemäß einer dritten Ausführungsform der Erfindung in Explosionsansicht und
- Figur 4: eine Einsatz-Abdeckung gemäß einer vierten Ausführungsform der Erfindung ebenfalls in Explosionsansicht.

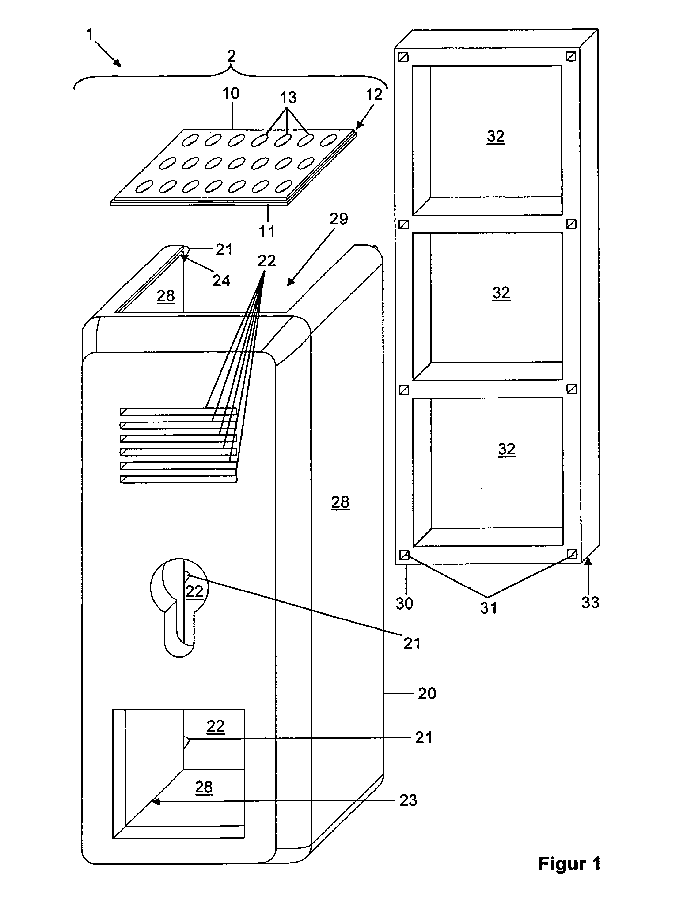

Figur 1 zeigt einen Einsatz 1 gemäß einer ersten Ausführungsform der Erfindung. Der Einsatz 1 umfasst eine Abdeckung 2 sowie hier einen Montagerahmen 30. Der Montagerahmen 30 ist in herkömmlicher Weise gestaltet, an einem Abschnitt einer nicht dargestellten Flügelanlage 3 befestigt zu werden. Daher sind die Befestigungsmittel zum Anbringen an ebenjenem Teil nicht näher dargestellt. Der Montagerahmen ist im gezeigten Beispiel für drei Funktionselemente der Flügelanlage 3, exemplarisch für Notschalter, Ansage- oder Alarmelement und Schlüsselschalter, ausgebildet. Der Montagerahmen 30 umfasst für jedes Element eine Durchgriffsöffnung 32. Ferner sind am Montagerahmen 30 hier acht in Richtung Abdeckung 2 weisende Befestigungselemente hier in Form von Klemmausnehmungen 31 ausgebildet, von denen der Übersichtlichkeit halber nur zwei mit Bezugszeichen versehen sind. In diese greifen im Montagezustand korrespondierende Klemmvorsprünge 21 eines Abdeckteils 20 der Abdeckung 2 ein, von denen drei ansatzweise sichtbar sind.

Das Abdeckteil 20 ist demgemäß ebenfalls für drei Funktionselemente ausgebildet. Es umfasst im oberen Bereich Durchgangsöffnungen 22 zur Schalldurchleitung vom vorgenannten Ansage- oder Alarmelement. In der Mitte ist eine Durchgangsöffnung 22 in Form eines Profilzylinder-Querschnitts für den vorgenannten Schlüsselschalter ausgebildet. Unten ist eine rechteckige Durchgangsöffnung 22 vorgesehen, durch die eine Abdeckung eines nicht dargestellten Nottasters hindurchgeführt ist.

Das Abdeckteil 20 ist mittels dreier Seitenwände 28 und der nicht bezeichneten Vorderseite zu vier Seiten hin geschlossen, und zwar nach vorn, rechts, links und unten. Unter anderem nach oben ist das Abdeckteil 20 offen, weist also in dieser Richtung eine offene Seite 29 auf, die zwischen den zwei vertikalen Seitenwänden 28 angeordnet ist und diese voneinander separiert. Innen ist das Abdeckteil 20 vorzugsweise durchgehend hohl ausgebildet, hat also die Form einer hier nach hinten und nach oben offenen Haube.

In eine obere, offene Seite 29 ist ein Abschlussteil 10 eingesetzt, das Abschlussteil 20 schließt diese Seite 29 hier vollständig. Das Abschlussteil 20 ist beispielhaft mit Löchern 13 versehen, die dem Abführen von Warmluft im Inneren der Abdeckung 2 dienen. Exemplarisch erfolgt das Einsetzen mittels Einschiebens des Abschlussteils 10 von hinten in das Abdeckteil 20. Dazu weist das Abdeckteil 20 im oberen Bereich der beiden vertikalen Seitenwände 28 nutenartige Ausnehmungen 24 auf, die einander zugewandt sind, und von denen nur die linke sichtbar ist. Zusätzlich ist im gezeigten Beispiel auch hinter der vorderen, nicht weiter bezeichneten Wand noch eine nun nach hinten weisende Ausnehmung 24 ausgebildet. Dementsprechend weist das Abschlussteil 10 an korrespondierenden Stellen einen hier um drei Seiten herum verlaufenden Einschub-Vorsprung 11 auf, der im Montagezustand in die hier zwei seitlichen Ausnehmungen 24 geführt aufgenommen sind und in der nach hinten weisenden Ausnehmung 24 als Abstützung aufgenommen ist. Damit das Abschlussteil 10 mit dem Abdeckteil 20 nach außen bündig abschließt, ist eine hier eckartige, ebenfalls um drei Seiten des Abschlussteils 10 verlaufende Ausnehmung 12 ausgebildet.

Beim Montieren wird also zunächst der Montagerahmen 30 beispielsweise auf einer Wand montiert. Parallel oder zeitlich dazu versetzt wird das Abschlussteil 10 hier von hinten in das Abdeckteil 20 geschoben. Danach wird die so gebildete Abdeckung 2 in Erstreckungsrichtung der Klemmausnehmungen 31 auf den Montagerahmen 30 aufgeschoben, wobei die Vorsprünge 21 mit den korrespondierenden der Ausnehmungen 31 in Klemmeingriff gelangen. In diesem Zustand kann das Abschlussteil 10 kaum oder gar nicht abgenommen werden, ohne die Abdeckung 2 zu beschädigen. Zudem liegen die Befestigungsmittel 11, 24 verdeckt, was der Manipulationssicherheit des gesamten Einsatzes 1 zugute kommt.

Hier liegt die Abdeckung 2 auf dem Montagerahmen 30 auf. Das Abdeckteil 20 kann selbstverständlich so ausgebildet sein, dass es im Montagezustand mit der hier Rückseite des Montagerahmens 30 bündig abschließt. D. h. auch der Montagerahmen ist nicht mehr zugänglich.

Vorzugsweise wird das Abdeckteil 20 mit Inneneckabschnitten 23, von denen einer sichtbar ist, beim Aufschieben auf den Montagerahmen 30 entlang zumindest einer korrespondierenden Außenkante 33 des Montagerahmens 30 geführt, was die Montage vereinfacht.

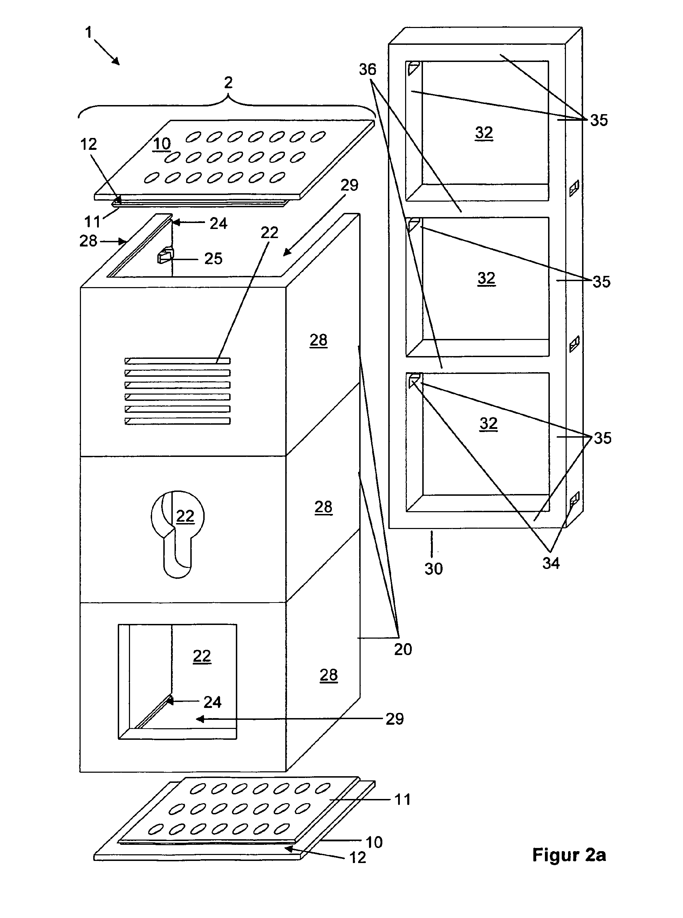

Figur 2a zeigt einen Einsatz 1 gemäß einer zweiten Ausführungsform der Erfindung in einer teilweisen Explosionsansicht. Im Gegensatz zur ersten Ausführungsform umfasst die Abdeckung 2 hauptsächlich fünf Bestandteile, nämlich drei Abdeckteile 20 und zwei Abschlussteile 10.

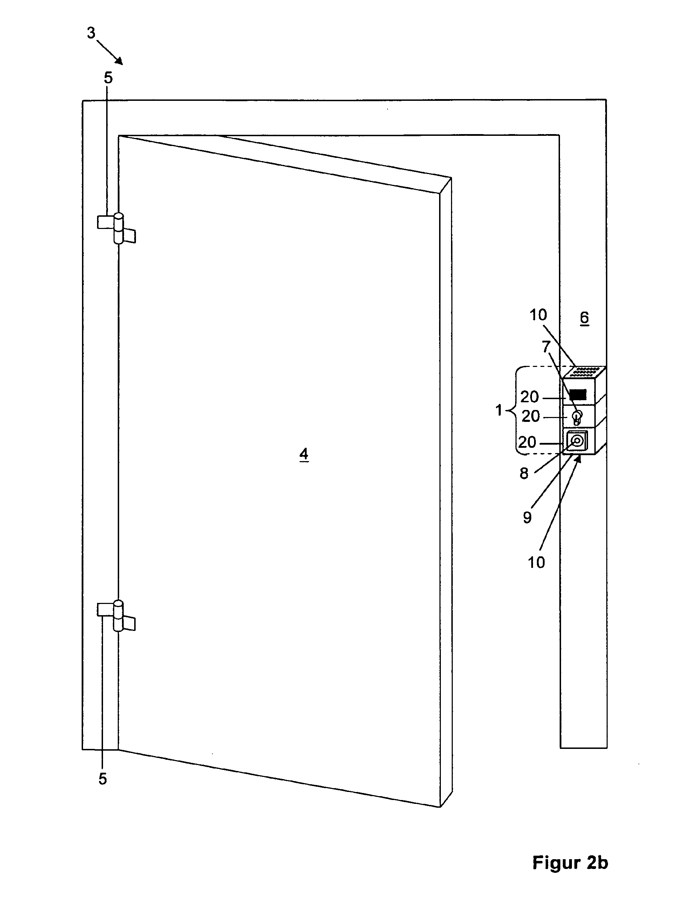

Alle Abdeckteile 20 sind vorzugsweise im Querschnitt U-förmig ausgebildet, weisen also sowohl oben als auch unten jeweils eine offene Seite 29 auf. D. h. sie weisen lediglich drei geschlossene Seiten, also Seitenwände 28 und Vorderseite, auf. Vorzugsweise alle Abdeckteile 20 weisen vorzugsweise sowohl oben als auch unten jeweilige Ausnehmungen 24 auf. Dies ermöglicht, jedes Abdeckteil 20 an jeder Position in Figur 2 einsetzen zu können. Dies ermöglicht ferner die Herstellung standardisierter Abdeckteile 20, deren Durchgangsöffnungen 22 nur noch an den jeweiligen Einsatz angepasst beispielsweise mittels Fräsens oder Pressens ausgebildet werden müssen.

Die Abschlussteile 10 sind exemplarisch identisch ausgebildet, verbunden mit dem Vorteil standardisierter Abschlussteile 10.

Das jeweilige Abschlussteil 10 ist mit seinem Vorsprung 11 in die ihm zugewandte Ausnehmung 24 des zugehörigen Abdeckteils 20 eingeschoben oder eingerastet. Für den zweiten Fall ist der jeweilige Vorsprung 11, wie andeutungsweise erkennbar, beispielhaft keilförmig ausgebildet. Er bildet mit dem sonstigen Abschlussteil 10 in diesem Bereich einen sich in Richtung Abdeckteil(en) 20 pyramidenstumpfartig hervorstehenden Abschnitt. Dies ermöglicht ein ortsfestes Einsetzen des jeweiligen Abschlussteils 10 in das ihm zugewandte Abdeckteil 20 bzw. dessen Ausnehmung 24 in Richtung quer zur Einsetzrichtung des Einsatzes 1, in Figur 2 also vertikal nach unten bzw. nach oben, und zwar auch, wenn das zugehörige oder alle Abdeckteil/e 20 bereits am Montagerahmen 30 befestigt sind. Die Ausnehmungen 24 sind so gestaltet, dass das jeweilige Abschlussteil 10 nach dem Anbringen am zugehörigen Abdeckteil 20 plan auf diesem, also auf dessen dem Abschlussteil 10 zugewandten, hier U-förmigen und nicht bezeichneten Stirnfläche, aufliegt.

Die Abdeckteile 20 sind vorteilhafterweise über nicht näher dargestellte Befestigungsmittel aneinander befestigt.

Alternativ oder zusätzlich sind beispielhaft alle Abdeckteile 20 einzeln am Montagerahmen 30 befestigbar gestaltet. Dazu weist jedes Abdeckteil 20 Rastköpfe 25 auf, von denen nur der obere linke des oberen Abdeckteils 20 sichtbar ist.

Der Montagerahmen 30 weist an korrespondierenden Stellen vorzugsweise durchgehend ausgebildete Rastausnehmungen 34 auf. Die Rastausnehmungen 34 sind hinterschnitten. D. h. sie weisen an ihrem dem jeweils zugehörigen, also zugewandten Rastkopf 25 zugewandten Ende eine kleinere Öffnungsweite auf als im aus Richtung ebenjenem Rastkopf 25 dahinter liegenden Bereich der Ausnehmung 34. Durch diesen Hinterschnitt ist es dem jeweiligen Rastkopf 25 möglich, die jeweilige Rastausnehmung 34 zu hintergreifen und damit mit dieser in Rasteingriff zu gelangen, ohne in die zugehörige, angrenzende Durchgriffsöffnung 32 hineinzuragen.

Die Durchgriffsöffnungen 32 sind mittels Seitenwänden 35 gebildet und mithilfe von Zwischenwänden 36 voneinander separiert. Die an eine selbe Durchgriffsöffnung 32 angrenzenden Rastausnehmungen 34 sind so ausgebildet, dass sie zur jeweils nächstliegenden Wand 35, 36 einen gleichen Abstand haben. Die Durchgriffsöffnungen 32 sind vorzugsweise ebenfalls identisch ausgebildet. Zumindest die hier horizontalen Wände 35, 36 haben vorzugsweise dieselbe Stärke. Dies ermöglicht, die Abdeckteile 20 in der Reihenfolge zueinander variabel anordnen zu können. Zudem ist es möglich, die Abdeckteile 20 oder auch den Montagerahmen 30 um eine Achse parallel zur Einsetzrichtung der Abdeckteile 20 auf den Montagerahmen 30 vorher um 180° drehen zu können, ohne dass sie nicht mehr am Montagerahmen montierbar wären.

Figur 2b zeigt den Einsatz 1 in Verbindung mit einer Flügelanlage 3. Die Flügelanlage 3 ist beispielhaft als Drehtüranlage ausgebildet. Die Flügelanlage 3 umfasst demnach eine Zarge 6, in deren Durchgangsbereich ein Türflügel 4 angeordnet und über Angeln 5 an ebenjener Zarge 6 schwenkbar bzw. drehbar gelagert aufgehängt ist. Der Türflügel 4 ist teilweise geöffnet dargestellt. Am rechten vertikalen Holm der Zarge 6 (nicht näher bezeichnet) ist der Einsatz 1 angebracht. Es sind die drei Abdeckteile 20 mit den Abschlussteilen 10 zumindest andeutungsweise zu erkennen. Das mittlere Abdeckteil 20 deckt einen Schlüsselschalter ab, dessen Profilzylinder 7 nach vorn teilweise aus dem Abdeckteil 20 hervorsteht. Das untere Abdeckteil 20 deckt einen Nottaster ab, dessen Betätigungsknopf 8 vorteilhafterweise hinter einer Nottaster-Abdeckung 9 angeordnet ist. Diese ist in Betätigungsrichtung, also in Richtung Betätigungsknopf 8, im unteren Abdeckteil 20 vorzugsweise geführt aufgenommen.

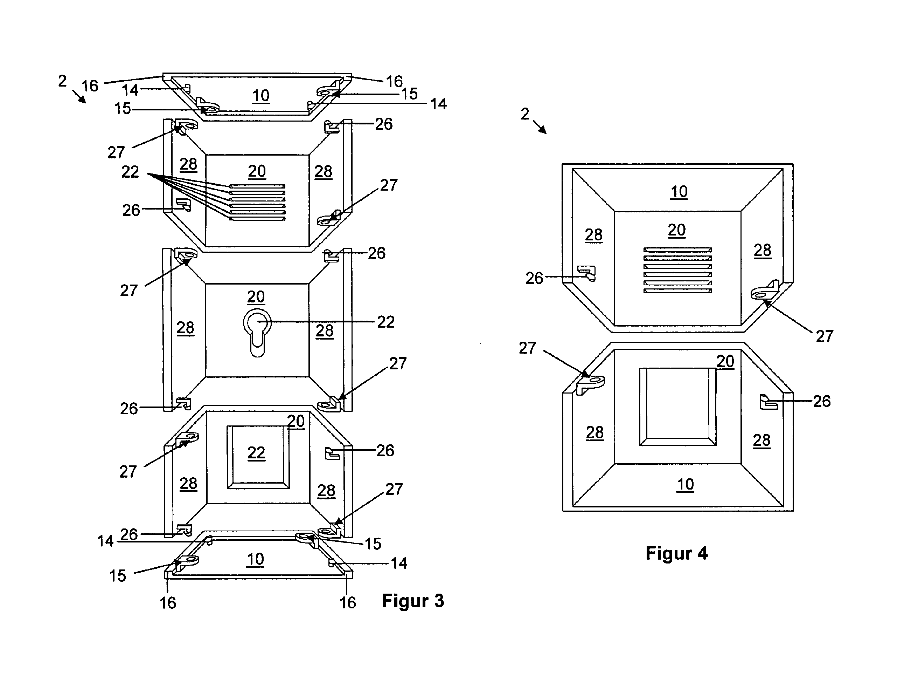

Figur 3 zeigt eine Abdeckung 2 gemäß einer dritten Ausführungsform der Erfindung in einer perspektivischen Explosionsansicht, und zwar aus Sicht des hier nicht abgebildeten Montagerahmens 30, also von der Rückseite in Figur 1 bzw. Figur 2.

Anstelle der vorbeschriebenen Feder-Nut-Befestigung zwischen Abdeckteil 20 und jeweiligem Abschlussteil 10 mithilfe von Vorsprung 11 und Ausnehmung 24 ist hier eine Rastbefestigung vorgesehen. Dafür weist jedes Abdeckteil 20 in einem dem zugehörigen Abschlussteil 10 zugewandten Bereich an einer Seitenwand 28 einen Rastvorsprung 26 und an der anderen Seitenwand 28 exemplarisch eine Rastaufnahme 27 auf. Beide sind jeweils an der Innenseite der jeweiligen Seitenwand 28 angeformt bzw. ortsfest angeordnet und erstrecken sich vorzugsweise aufeinander zu. An ihren freien Enden ist entsprechend entweder ein sich in Richtung Abschlussteil 10 hervorstehender, nicht näher bezeichneter Rastkopf oder eine sich in diese Richtung erstreckende Rastöffnung bzw. -ausnehmung ausgebildet. Das zugehörige Abschlussteil 10 weist dementsprechend eine vorzugsweise identisch ausgebildete Paarung von Rastausnehmung 15 bzw. Rastvorsprung 14. Werden exemplarisch das obere Abschlussteil 10 und das obere Abdeckteil 20 in Figur 3 vertikal zusammengebracht, gelangen die Rastköpfe der Rastvorsprünge 26, 14 mit der Rastausnehmung der korrespondierenden Rastaufnahme 15, 27 in Rasteingriff, sodass beide Teile 10, 20 aneinander befestigt sind. Wie zu erkennen, ist jede Rastausnehmung 15, 27 im Wesentlichen L-förmig ausgebildet. Ein Schenkel dieses L liegt vorzugsweise an der Innenfläche der zugehörigen Seitenwand 16, 28 des Abschlussteils 10 bzw. Abdeckteils 20 an und erstreckt sich in Richtung zugehörigem Abschlussteil 20 bzw. Abschlussteil 10. Dadurch kommt die Seitenwand 16, 28 mit ihrer Innenfläche an ebenjenem Schenkel der Rastaufnahme 27, 15 zu liegen. Dies führt dazu, dass mit der Verrastung die Teile 10, 20 zumindest nach rechts und links in Figur 3 noch besser fixiert sind als es allein mit der Verrastung möglich wäre.

Zusätzlich oder alternativ kann wieder eine Feder-Nut-Verbindung vorgesehen werden, nunmehr an den einander zugewandten Flächen hier vertikaler Wände, also beispielsweise der Seitenwände 16, 28, des Abschlussteils 10 bzw. Abdeckteils 20.

In der gezeigten Darstellung weist das Abschlussteil 10 zwei Rastvorsprünge 14 und zwei Rastaufnahmen 15 auf. Die hier hinteren Elemente 14, 15 können dem Zweck dienen, sie auf anders gestaltete Abdeckteile 20 aufzusetzen, die also zusätzlich oder alternativ auch anderen Stellen Elemente 26, 27 aufweisen.

Im dargestellten Beispiel weist jedes Abdeckteil 20 sowohl oben als auch unten eine jeweilige Paarung von Elementen 26, 27 auf. Dadurch können alle Abdeckteile 20 vorab aneinander befestigt werden, wodurch eine Art Abdeckmodul entsteht. Dieses kann dann als Ganzes beispielsweise am vorgenannten Montagerahmen 30 angebracht werden, was die Montage einfach hält. Beispielhaft sind an einer Seitenwand 28 nur jeweils ein Rastvorsprung 26 und eine Rastaufnahme 27 angeordnet.

Alle Elemente 14, 15 bzw. 26, 27 sind weiter vorzugsweise so angeordnet, dass sich sowohl in der dargestellten Stellung als auch in einer Stellung, in der das jeweilige Teil 10 bzw. 20 um 180° entlang einer Achse senkrecht zur Bildebene, also um eine Achse parallel zur Einsetzrichtung des Einsatzes 1 bzw. Aufsetzrichtung der Abdeckung 2, rotiert ist, eine gleiche Anordnung der Elemente 14, 15; 26, 27 in Bezug auf die zugehörige Seitenwand 16 bzw. 28 und das zugehörige Teil 10 bzw. 20 ergibt. D. h. die Teile 10, 20 sind hinsichtlich ihrer Befestigungsmittel 14, 15; 26, 27 rotationssymmetrisch ausgebildet. Dies ermöglicht zum Einem, jedes Abschlussteil 10 auf jede offene Seite 29 auf- bzw. in diese einsetzen zu können, wie übrigens auch bei den gezeigten vorigen Ausführungen. Zum anderen können die Abdeckteile 20 einfach in ihrer Reihenfolge zueinander verändert werden und vorteilhafterweise auch noch um 180° um besagte Achse rotiert werden, ohne dass die Teile 10, 20 nicht mehr (aneinander) befestigt werden könnten. Insgesamt erhöht sich die Einsatzflexibilität der Abdeckung 2.

Figur 4 zeigt eine Abdeckung 2 gemäß einer vierten Ausführungsform der Erfindung. Hier sind Abschlussteil 10 und zugehöriges Abdeckteil 20 einstückig ausgebildet. Es entfallen somit die notwendigen Montageschritte zum Anbringen des Abschlussteils 10 am zugehörigen Abdeckteil 20. Die Elemente 26, 27 zwischen den nun nur noch zweiseitig offenen Abdeckteilen 20 dienen weiterhin dem Befestigen der Abdeckteile 20 aneinander. Hier besteht die Abdeckung 2 nur aus zwei Abdeckteilen 20. Es können selbstredend noch weitere Abdeckteile 2 gemäß Figur 3 zwischen die Abdeckteile 20 gemäß Figur 4 gesetzt werden.

Die Erfindung ist nicht auf die vorbeschriebenen Ausführungsformen beschränkt.

Die Abschlussteile 10 können zusätzlich oder anstelle der vorbeschriebenen Löcher 13 jedwedes andere Element, sei es technisch oder optisch bedingt, aufweisen. Beispielsweise kann eine Kabeldurchführung vorgesehen sein. Es können Anzeigeelemente beispielsweise in Form von LEDs vorgesehen sein, die die Abdeckung 2 beispielhaft oben und unten indirekt beleuchten und damit auch im Dunkeln erkennbar machen. Es können grafische Elemente wie Logos aufgebracht sein; der Kreativität sind keine Grenzen gesetzt.

Die Abdeckung 2 kann hinsichtlich ihrer Außenform ähnlich anderen Teilen der Flügelanlage 3 gestaltet sein. Sie kann beispielsweise an die äußere Form eines Türantriebs bzw. dessen Abdeckung angepasst werden.

Die Rastausnehmungen 34 können als Durchgangsöffnungen, also ohne Hinterschnitt, ausgebildet sein. In dem Fall stehen die zugehörigen Rastköpfe 25 so weit hervor, dass sie die jeweilige Seitenwand 35 vollständig durchgreifen und damit etwas in den Innenraum des Montagerahmens 30 hervorstehen.

Alle vorbeschriebenen Befestigungen können miteinander oder mit jeder anderen bekannten Befestigungsart kombiniert oder durch sie ersetzt sein.

Die Ausführungsformen können miteinander kombiniert werden. Beispielsweise kann die erste Ausführungsform dahingehend abgewandelt werden, dass sie wie die zweite und dritte Ausführungsform auch unten eine offene Seite 29 aufweist, die von einem zugehörigen Abschlussteil 10 verschlossen ist. Das einstückige Ausbilden von Abschlussteil 10 und Abdeckteil 20 kann sich nur auf ein Teil der Abdeckung 2 beziehen.

Die Anzahl und Reihenfolge an Abdeckteilen 20 pro Abdeckung 2 ist, abgesehen vielleicht von der Stabilität der gesamten Anordnung, nicht begrenzt.

Die Durchgriffsöffnungen 22 dienen lediglich dem Verständnis des Einsatzzwecks der Abdeckung 2. Sie können, sofern nicht erforderlich, entfallen oder je nach der Art des zugehörigen Funktionselements jede andere Form annehmen.

Der Begriff "Funktionselement" beschränkt sich nicht nur darauf, dass das jeweilige Elemente etwas akustisch und/oder optisch anzeigt bzw. betätigt wird. Es kann sich beispielsweise auch um einen Sensor, eine Tastatur oder dergleichen handeln. Es könnte sich beispielsweise auch um eine versteckte Steckdose handeln. Beispielsweise kann das vorgenannte Ansage- oder Alarmelement durch ein Hinweisschild beispielsweise zur Kennzeichnung eines Fluchtwegs ersetzt oder um dieses ergänzt sein. Das Hinweisschild kann dann am zugehörigen Abdeckteil 20 befestigt oder einstückig mit diesem ausgebildet sein. Alternativ durchgreift es einfach die Durchgriffsöffnung dieses Abdeckteils 20. Da hinter dem Hinweisschild Platz ist, kann zudem eine Beleuchtung als anderer Bestandteil dieses Flügelanlagen-Funktionselements vorgesehen sein, die vorteilhafterweise als Einsatz 1 montiert ist.

Anstelle oder zusätzlich zum Montagerahmen 30 kann ein klassischer Tragring vorgesehen sein, über den das jeweilige Funktionselement Unterputz oder, über ein Adapterteil, Aufputz montierbar ist. Im ersten Fall ist vorsehbar, dass zwischen Tragring und Aufnahmeabschnitt, wie einer Wand, ein Spalt verbleibt, in den die Abdeckung 2 eingeklipst wird. Im zweiten Fall kann der Montagerahmen 30 stattdessen über Laschen verfügen. Die Laschen fluchten mit zugehörigen Schraub- bzw. Befestigungsöffnungen des Tragrings. Dadurch kann der Montagerahmen 30 (vorab) am Tragring befestigt werden, bevor die Abdeckung 2 aufgesetzt wird.

Der Aufnahmeabschnitt kann mittels jeden Teils der Flügelanlage 3 gebildet sein, der geeignet ist, den Einsatz 1 aufzunehmen bzw. zu halten. Der Flügel 4 kann ebenfalls als Aufnahmeabschnitt in Frage kommen.

### Bezugszeichenliste

- 1: Einsatz
- 2: Abdeckung
- 3: Flügelanlage
- 4: Türflügel
- 5: Angel
- 6: Zarge
- 7: Profilzylinder
- 8: Betätigungsknopf
- 9: Abdeckung

- 10: Abschlussteil
- 11: Vorsprung
- 12: Ausnehmung
- 13: Loch
- 14: Rastvorsprung
- 15: Rastaufnahme
- 16: Seitenwand

- 20: Abdeckteil
- 21: Klemmvorsprung
- 22: Durchgangsöffnung
- 23: Inneckabschnitt
- 24: Ausnehmung
- 25: Rastkopf
- 26: Rastvorsprung
- 27: Rastaufnahme
- 28: Seitenwand
- 29: Seite

- 30: Montagerahmen
- 31: Klemmausnehmung
- 32: Durchgriffsöffnung
- 33: Außenkante
- 34: Rastausnehmung
- 35: Seitenwand
- 36: Zwischenwand

## Patentansprüche

1. Abdeckung (10, 20) eines Einsatzes (1),
• wobei der Einsatz (1)
- gestaltet ist, in einen oder an einem korrespondierenden Aufnahmeabschnitt (6) einer Flügelanlage (3) ortsfest eingesetzt bzw. befestigt zu werden, die zumindest einen ortsfesten, schwenkbaren und/oder entlang eines Verfahrwegs bewegbaren Flügel (4) aufweist, und
- eingerichtet ist, zumindest ein Funktionselement der Flügelanlage (3) haltend aufzunehmen, sowie
• umfassend
- zumindest ein Abdeckteil (20) das
. gestaltet ist, auf dem sonstigen Einsatz (1) diesen und zumindest eines des zumindest einen vom Einsatz (1) gehaltenen Funktionselements in eine Richtung entgegengesetzt zu einer Einsetzrichtung des Einsatzes (1) in den Aufnahmeabschnitt (6) zumindest teilweise abdeckend befestigt zu werden,
. zumindest zu zwei Seiten (28) hin geschlossen ist, die
o im Wesentlichen parallel zueinander verlaufen und
o voneinander weg sowie jeweils in eine Richtung im Wesentlichen senkrecht zur Einsetzrichtung des Einsatzes (1) in den Aufnahmeabschnitt (6) weisen, und
. zumindest zu einer Seite (29) der Abdeckung (10, 20) hin offen ist, die
o zwei der zumindest zwei geschlossenen Seiten (28) miteinander verbindet und
o von diesen zwei Seiten (28) weg ebenfalls in eine Richtung im Wesentlichen senkrecht zur Einsetzrichtung des Einsatzes (1) in den Aufnahmeabschnitt (6) weist, sowie
- zumindest ein Abschlussteil (10), das derart gestaltet ist, an dem zumindest einen Abdeckteil (20) eine jeweilige der zumindest einen offenen Seite (29) schließend befestigt zu werden, dass eine haubenartige Abdeckung (10, 20) entsteht, und/oder
- zumindest ein zweites Abdeckteil (20), das wie das zumindest eine Abdeckteil (20) gebildet ist, wobei beide Abdeckteile (20) mit ihrer jeweiligen, zumindest einen offenen Seite (29) aufeinander zu aneinander anliegen.

2. Abdeckung (10, 20) gemäß Anspruch 1, wobei der Aufnahmeabschnitt der Flügelanlage (3) bewegbar oder ortsfest ausgebildet bzw. angeordnet ist.

3. Abdeckung (10, 20) gemäß einem der vorhergehenden Ansprüche, das ferner an der zumindest einen offenen oder einer dieser offenen Seite (29) gegenüberliegenden Seite (28, 29) gestaltet ist, an einer zugewandten der zumindest einen offenen bzw. nunmehr dieser offenen Seite (29) gegenüberliegenden Seite (28, 29) eines zweiten Abdeckteils (20) gemäß einem der vorhergehenden Ansprüche ortsfest angebracht zu werden.

4. Abdeckung (10, 20) gemäß Anspruch 3, das ferner sowohl an der zumindest einen offenen Seite (29) als auch an der dieser gegenüberliegenden Seite (29) gemäß Anspruch 3 gestaltet ist.

5. Abdeckung (10, 20) gemäß einem der vorhergehenden Ansprüche, wobei die Befestigung des zumindest einen Abschlussteils (10) oder Abdeckteils (20) am sonstigen bzw. zweiten Abdeckteil (20) mittels Verrastens und/oder Klemmens erfolgt.

6. Abdeckung (10, 20) gemäß einem der vorhergehenden Ansprüche, wobei das zumindest eine Abdeckteil (20) das zu zwei einander abgewandten Seiten (29) jeweils gemäß einem der vorhergehenden Ansprüche hin offen ausgebildet ist.

7. Abdeckung (10, 20) gemäß einem der vorhergehenden Ansprüche, wobei das zumindest eine Abdeckteil (20) hinsichtlich der Befestigung eines Abschlussteils (10) oder eines zusätzlichen Abdeckteils (20) um eine Achse parallel zur Einsetzrichtung des zugehörigen Einsatzes (1) um 180° rotationssymmetrisch ausgebildet ist.

8. Flügelanlage (3),
• ausgebildet gemäß Anspruch 1 und
• aufweisend zumindest einen Einsatz (1) gemäß Anspruch 1, der
- zumindest ein Funktionselement der Flügelanlage (3) hält,
- eine Abdeckung (10, 20) gemäß einem der vorhergehenden Ansprüche umfasst und
- in einen korrespondierenden Aufnahmeabschnitt (6) der Flügelanlage (3) ortsfest eingesetzt ist,
• wobei die Abdeckung (10, 20) an dem zumindest einen Einsatz (1) gemäß Anspruch 1 befestigt ist.

9. Flügelanlage (3) gemäß Anspruch 8, wobei die Abdeckung (10, 20) an jeder, aufgrund des zumindest einen Abdeckteils (20) vorhandenen offenen Seite (29) mittels eines jeweiliges Abschlussteils (10) geschlossen ist.
